Europäisches Patentamt

(19) European Patent Office

Office européen des brevets

(11) Numéro de publication: **0 004 244**

**A2**

(12) **DEMANDE DE BREVET EUROPEEN**

(21) Numéro de dépôt: **79400157.8**

(22) Date de dépôt: **09.03.79**

(51) Int. Cl.²: **B 62 D 5/06**

(30) Priorité: **09.03.78 FR 7806790**

(43) Date de publication de la demande:
**19.09.79 Bulletin 79/19**

(84) Etats contractants désignés:
**DE GB IT SE**

(71) Demandeur: **SOCIETE ANONYME D.B.A.**
**98 boulevard Victor Hugo**
**F-92115 Clichy(FR)**

(72) Inventeur: **Kervagoret, Gilbert**
**5 Impasse Nobleterre**
**F-95100 Argenteuil(FR)**

(72) Inventeur: **Tanguy, Christian**
**34bis Avenue Gaston Bourry**
**F-95740 Frepillon(FR)**

(74) Mandataire: **Huchet, André et al,**
**44 rue François 1er**
**F-75008 Paris(FR)**

(54) Mécanisme d'assistance hydraulique, en particulier pour direction assistée de véhicule.

(57) Le mécanisme de direction comporte un arbre d'entrée (16) et un arbre de sortie (18) coaxiaux.

Un système de distribution rotatif à centre fermé comporte un piston (52) monté coulissant dans un alésage prévu dans un boîtier solidaire d'un arbre d'entrée (16) et perpendiculaire à l'axe des arbres d'entrée (16) et de sortie (18). L'une des faces du piston (52) est soumise à une haute pression et l'autre face est soumise à une pression intermédiaire communiquée à un compartiment d'un moteur hydraulique d'assistance. Un élément de commande (110) solidaire de l'arbre de sortie pénètre dans le piston, perpendiculairement à son axe.

En fonctionnement, le déplacement relatif du piston (52) et de l'élément de commande, en réponse à une rotation relative de l'arbre d'entrée et de l'arbre de sortie, agit sur le distributeur pour augmenter ou diminuer la pression communiquée au compartiment du moteur hydraulique. Un mécanisme à ressort (90) associé avec le piston (52) permet de moduler la caractéristique du distributeur.

FIG. 2

EP 0 004 244 A2

1

# MECANISME D'ASSISTANCE HYDRAULIQUE, EN PARTICULIER POUR DIRECTION ASSISTEE DE VEHICULE

La présente invention concerne un mécanisme d'assistance hydraulique à centre fermé, en particulier pour direction assistée de véhicule automobile.

Les mécanismes d'assistance hydraulique pour direction assistée de véhicule ont pour but de fournir à la timonerie des roues de véhicule une force destinée à assister l'effort de braquage appliqué par le conducteur. Ces mécanismes comportent une valve de distribution sensible à l'application d'un couple d'entrée pour diriger vers les compartiments respectifs d'un moteur d'assistance, une haute et une basse pression. La différence de pression ainsi obtenue provoque le déplacement d'un piston qui est lié à la timonerie du véhicule pour agir sur cette dernière dans le même sens que la commande mécanique résultant de l'effort de braquage.

Le fonctionnement d'un mécanisme de direction assistée est essentiellement fonction de la forme d'une courbe appelée "caractéristique du distributeur" et qui représente la valeur absolue de la différence des pressions délivrées respectivement aux chambres du moteur d'assistance, en fonction du couple appliqué au volant de direction. Cette caractéristique passe par la valeur zéro lorsqu'aucun couple n'est appliqué au volant de direction, et a une allure sensiblement parabolique. Néanmoins, dans la pratique, on peut le plus souvent obtenir une bonne approximation de la caractéristique parabolique en s'arrangeant pour que la courbe caractéristique effective comporte trois portions sensiblement linéaires ; la première portion pour des valeurs du couple voisines de zéro, a une pente sensiblement nulle et correspond à la conduite de véhicule sur route normale à grande vitesse ou sur route glissante. Pour des couples d'entrée plus grands, la deuxième portion de la caractéristique adjacente à la première portion, a une pente supérieure et correspond sensiblement à la conduite sur route normale et à vitesse normale. La troisième portion qui possède une pente encore supérieure est adjacente à la deuxième portion et correspond à la conduite de manoeuvres de stationnement pour laquelle le couple d'entrée est grand.

Le but de la présente invention est de proposer un mécanisme d'assistance hydraulique comportant un distributeur à centre fermé qui permet d'obtenir une caractéristique couple-pression présentant une pluralité de portions sensiblement linéaires et adjacentes, le distributeur présentant une structure qui permet de modifier à volonté la forme de caractéristique par des moyens simples.

A cet effet, le mécanisme d'assistance hydraulique selon l'invention comporte un boîtier à l'intérieur duquel sont disposés un organe d'entrée susceptible d'être commandé en rotation par un opérateur, un organe de sortie disposé coaxial avec l'organe d'entrée et relié élastiquement à ce dernier, un distributeur de fluide ayant un orifice d'entrée destiné à être relié à une source de haute pression, un orifice de sortie destiné à être relié à une source de basse pression, et un orifice de travail destiné à être relié à un compartiment d'un moteur hydraulique d'assistance, l'organe distributeur de fluide comprenant un corps solidaire de l'un des organes d'entrée ou de sortie, à l'intérieur duquel est défini un premier alésage, un organe mobile monté coulissant dans l'alésage et qui sépare ce dernier en un premier et un deuxième compartiments respectivement en communication avec l'orifice d'entrée et

avec l'orifice de travail, ledit organe mobile ayant une face de petite section soumise à la pression qui règne dans le premier compartiment et une face de grande section soumise à la pression qui règne dans le deuxième compartiment, l'organe mobile comportant d'autre part un premier passage normalement fermé et destiné à mettre en communication le premier et le deuxième compartiments, et un deuxième passage également normalement fermé, et destiné à mettre en communication le deuxième compartiment avec l'orifice de sortie, un organe de contrôle solidaire de l'autre des organes d'entrée et de sortie, ledit organe de contrôle occupant normalement une position de repos par rapport à l'organe mobile pour laquelle la communication de fluide dans le premier et dans le deuxième passages est interrompue, ledit organe de contrôle étant susceptible de se déplacer par rapport à l'organe mobile et au corps, en réponse à une rotation relative de l'organe d'entrée et de l'organe de sortie, pour commander l'ouverture de la communication de fluide dans l'un ou l'autre desdits passages et provoquer, dans le deuxième compartiment une variation de pression tendant à commander un déplacement de l'organe mobile de manière à ramener ce dernier dans sa position de repos par rapport à l'organe de contrôle pour interrompre ladite communication de fluide, un ensemble élastique étant prévu dans le deuxième compartiment pour opposer une force de résistance audit déplacement de l'organe mobile, la force de résistance ayant une valeur dont le taux de croissance augmente par paliers au fur et à mesure de l'augmentation du déplacement.

L'invention est maintenant décrite à titre d'exemple et d'autres avantages apparaîtront à la lecture de la description qui va suivre et qui est faite en se référant aux figures des dessins annexés dans lesquels :

        - la figure 1 est une vue partielle en coupe longitudinale d'un mécanisme d'assistance hydraulique selon la présente invention, dans son application à un

dispositif de direction assistée ...

- la figure 2 est une vue en coupe selon la ligne 2-2 de la figure 1, qui illustre plus particulièrement le distributeur à centre fermé du mécanisme de direction assistée ;

- la figure 3 est une vue en coupe selon la ligne O-A de la figure 2 ;

- la figure 4 est une vue en coupe selon la ligne O-B de la figure 2 ;

- la figure 5 est une vue partielle en coupe selon la ligne 1-1 de la figure 2 ;

- la figure 6 est une courbe représentant les variations en valeur absolue de la pression dans le deuxième compartiment en fonction de la valeur absolue de la pression dans le deuxième compartiment en fonction de la valeur absolue du couple appliqué à l'organe d'entrée

- la figure 7 est une vue en coupe sensiblement identique à celle de la figure 2, qui montre un distributeur dans lequel l'écoulement du fluide n'est pas contrôlé par des valves à clapet, mais par une valve à tiroir ;

- la figure 8 est une vue schématique agrandie de la valve à tiroir de la figure 7, lorsque cette dernière est actionnée dans une première direction ;

- la figure 9 est une vue schématique identique à celle de la figure 8, lorsque la valve à tiroir est actionnée dans une autre direction.

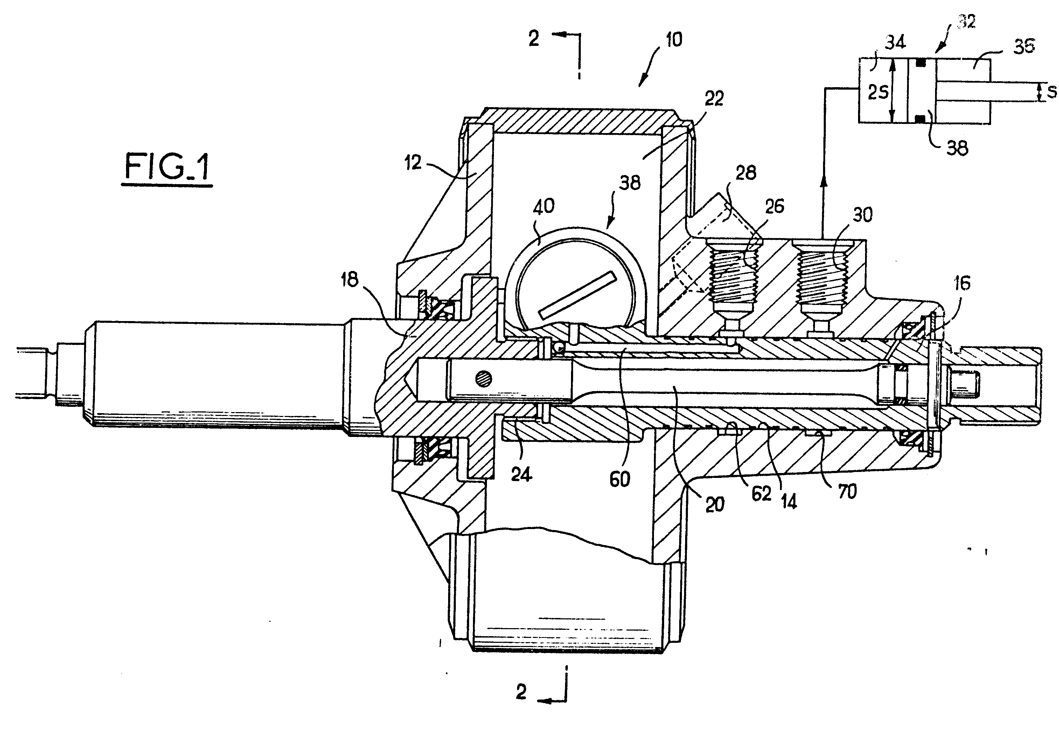

Si on considère maintenant la figure 1, on a représenté un mécanisme de direction assistée 10 comportant un boîtier 12, à l'intérieur duquel est défini un alésage 14. Un arbre d'entrée 16 relié à la colonne de direction (non représentée) du véhicule, tourillone dans l'alésage 14 et un arbre de sortie 18 est monté de façon classique coaxial avec l'arbre d'entrée 16, et relié à ce dernier par l'intermédiaire d'un élément de liaison élastique constitué par une barre de torsion 20. L'arbre de sortie 18 supporte un pignon destiné à coopérer avec la

crémaillère (non représentée) du mécanisme de direction.
On notera toutefois que l'arbre de sortie pourrait également coopérer avec tout autre système de commande de la
direction, tel qu'une vis globique par exemple, sans pour
cela sortir du cadre de la présente invention. A l'intérieur du boîtier est également définie une chambre annulaire 22 qui prolonge l'alésage 14, ladite chambre annulaire étant adjacente audit alésage et ayant un diamètre
plus grand que ce dernier. L'arbre de sortie 18 pénètre
dans une ouverture axiale définie à l'extrémité gauche de
l'arbre d'entrée. En outre, l'arbre d'entrée et l'arbre
de sortie sont montés de telle sorte que soit autorisé un
jeu angulaire maximum entre ces deux éléments par l'intermédiaire de dents 24 qui coopèrent de manière classique,
afin d'assurer une commande directe de l'arbre de sortie,
en cas de panne du mécanisme d'assistance. Le boîtier 12
comporte un orifice d'entrée 26 connecté à une source de
pression (non représentée) comportant une pompe et un
accumulateur de pression, un orifice de sortie 28 connecté
à une source de basse pression constituée par un réservoir
de fluide (non représenté), et un orifice de travail 30,
connecté à un moteur hydraulique 32 qui coopère avec la
tringlerie de la direction du véhicule pour lui fournir
la force d'assistance. Le moteur comporte deux compartiments 34 et 36 séparés par un piston 38 monté de façon
coulissante dans un alésage, de telle sorte que la face
du piston soumise à la pression dans le compartiment 34,
a une surface dont la valeur est double de celle de la face
du piston soumise à la pression qui règne dans le compartiment 36. Le piston comporte une tige qui traverse le
compartiment 36 et qui est destiné à actionner la timonerie de la direction du véhicule. Le compartiment 36 est
soumis en permanence à la pression qui provient de la génération hydraulique de haute pression et la pression délivrée au compartiment 34 à partir de l'orifice de travail
30, est normalement égale à Paccu/2, lorsque le mécanisme d'assistance occupe sa position de repos, l'acti étant la
pression délivrée par l'accumulateur.

Si l'on considère maintenant les figures 1 et
2, le mécanisme de direction assistée comporte un distributeur de fluide à centre fermé désigné de façon générale
par la référence 38 et qui est destiné à contrôler la communication de fluide entre l'orifice de travail 30 et les
orifices d'entrée 26 et de sortie 28. Le distributeur de
fluide est constitué de la manière suivante : un corps 40
est venu de matière avec l'arbre d'entrée 16 et situé dans
la chambre annulaire 22 de manière à pouvoir se déplacer
en rotation dans cette dernière lorsque l'arbre d'entrée
16 est actionné. A l'intérieur du corps 40 est défini un
alésage 42 d'axe perpendiculaire à l'axe des arbres d'entrée et de sortie et qui comporte une portion centrale 43
qui ouvre sur deux portions adjacentes de plus grand diamètre 44 et 46 respectivement. La portion de grand diamètre 44 de l'alésage 42 est refermée par un bouchon 48 à
l'intérieur duquel est défini un trou borgne 50 qui ouvre
sur l'alésage central 43. Le trou borgne 50 a une section
efficace égale à la moitié de la section efficace de l'alésage central 43. Un piston étagé 52 comporte une portion
de petit diamètre 53 et une portion de grand diamètre 55
qui coulissent respectivement dans le trou borgne 50 et
dans l'alésage central 43. Un premier compartiment 54 est
défini entre l'extrémité de petit diamètre du piston étagé
52 et la paroi interne du trou borgne 50.

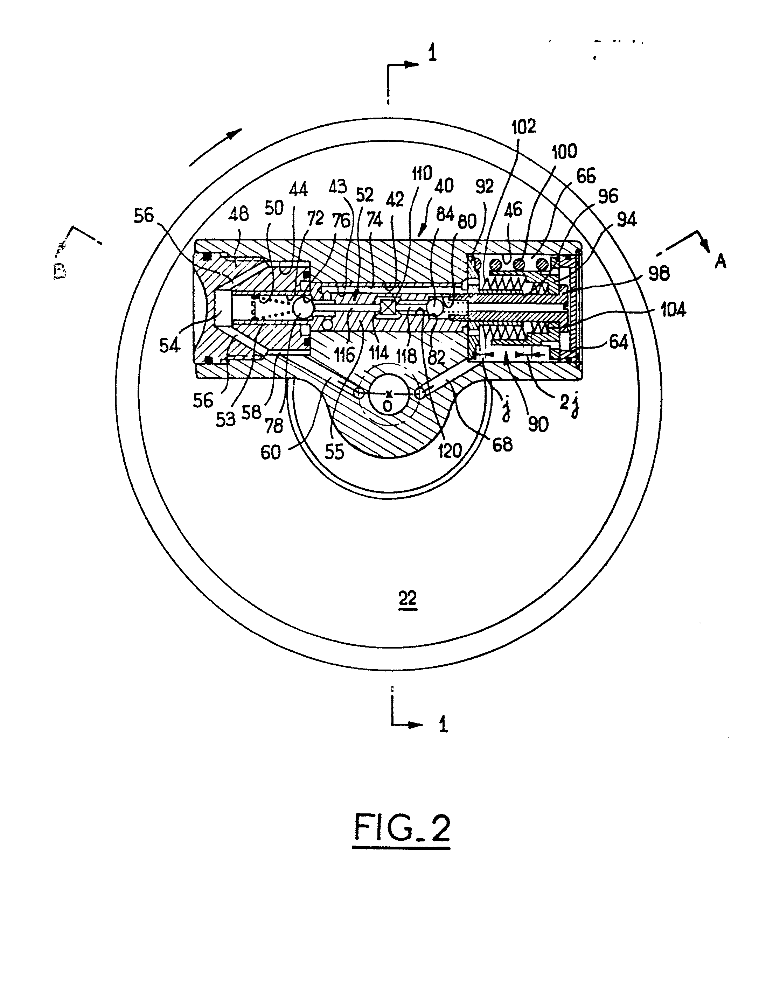

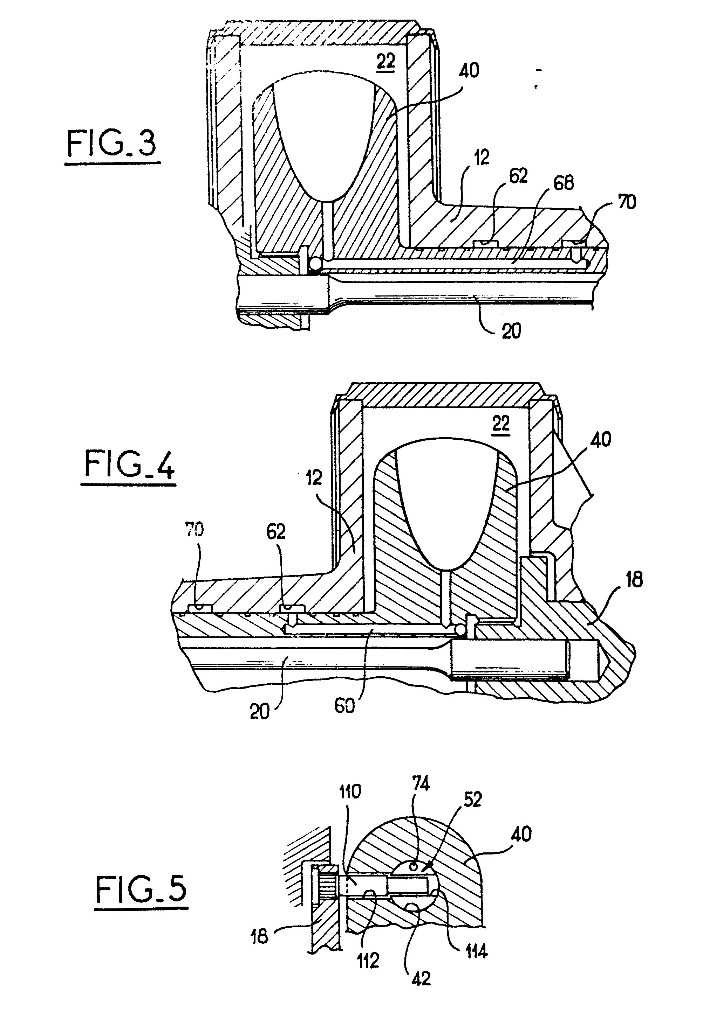

Si on considère maintenant les figures 3 et 4,
en combinaison avec les figures 1 et 2, on se rend compte
que le compartiment 54 est en communication avec l'orifice
d'entrée 26 par l'intermédiaire de passages 56 du bouchon
48, d'un espace annulaire 58 entre le bouchon 48 et la
portion de grand diamètre 44 de l'alésage, d'un passage
60 de l'arbre d'entrée 16 et d'une gorge annulaire 62 de
l'alésage 14 du boîtier 12. La portion de grand diamètre
46 de l'alésage 42 est refermée par un couvercle 64

maintenu par un circlips de manière à définir un deuxième compartiment 66 à l'intérieur duquel l'extrémité de grand diamètre 55 du piston étagé 52 est susceptible de pénétrer au cours d'un déplacement relatif du corps 40 du distributeur et du piston 52. Le compartiment 66 est en communication avec l'orifice de travail 30 par l'intermédiaire d'un passage 68 défini dans l'arbre d'entrée 16 et d'une gorge 70 de l'alésage 14.

En se référant à nouveau à la figure 2, l'organe distributeur comporte un premier passage destiné à permettre une communication entre le premier compartiment 54 et le deuxième compartiment 66. Selon le mode de réalisation qui est ici décrit, le premier passage est défini dans le piston différentiel 52 et comporte une portion axiale 72 disposée selon l'axe du piston et ouvrant sur le compartiment 54, cette portion 72 étant continuée par un passage axial 74 décalé par rapport à l'axe du piston 52 et débouchant dans le compartiment 66. Dans le passage axial 72 est défini un siège de valve 76 destiné à coopérer avec un élément de fermeture 78 constitué ici par une bille sollicitée contre le siège 76 sous l'influence de la pression de fluide en provenance du compartiment 54, pour constituer une valve anti-retour.

L'organe distributeur comporte également un deuxième passage destiné à permettre la communication entre le deuxième compartiment 66 et l'orifice de sortie 28. Selon le mode de réalisation qui est décrit, le deuxième passage est également défini dans le piston différentiel 52 et comporte une portion axiale 80 alignée avec la portion axiale 72 du premier passage et débouchant dans le deuxième compartiment 66. Dans la portion axiale 80 est défini un siège de valve 82 coopérant avec un élément de fermeture 84 également constitué par une bille sollicitée contre le siège 82 par la pression qui règne dans la compartiment 66, pour définir une valve anti-retour contrôlant la communication de fluide entre le compartiment 66 et l'orifice de sortie 28. La partie de la portion axiale 80 située en aval de l'élément de fermeture 84 est en communication avec l'orifice de sortie 28 par l'intermédiaire d'un passage radial qui sera décrit plus en détail dans la suite de la description.

Un ensemble élastique désigné de façon générale par la référence numérique 90 est disposé dans le compartiment 66. Le rôle de l'ensemble élastique 90 est d'opposer une force de résistance au déplacement du piston différentiel 52 vers la droite ou vers la gauche à partir de sa position de repos, lorsque le piston est sollicité par une force résultant d'une variation de pression dans le compartiment 66. L'ensemble élastique comporte deux organes mobiles 92, 94 montés coulissants sur une extension tubulaire 96 située dans le compartiment 66 et emmanchée dans la portion axiale 80, du piston différentiel 52. Entre les pièces en vis-à-vis des organes mobiles 92, 94 est disposée une pluralité de ressorts coaxiaux Dans la position de repos de l'organe distributeur, les organes 92, 94 sont sollicités par l'un desdits ressorts coaxiaux désigné sur la figure 2 par la référence numérique 100, respectivement en butée contre un épaulement du compartiment 66 adjacent à l'alésage 42 et contre le couvercle 64 et une bride 98 définie à l'extrémité de l'extension tubulaire 96. Les autres ressorts coaxiaux sont ici constitués par des empilements de rondelles élastiques de type Belleville montées entre les faces en vis-à-vis des organes mobiles 92, 94, chaque empilement de rondelles étant monté avec jeu entre lesdits organes mobiles lorsque ces derniers occupent leur position de repos. Sur le mode de réalisation représenté, on a montré un premier empilement 102 et un deuxième empilement 104 de rondelles Belleville montées respectivement avec jeu "j" et "2j" entre les organes mobiles. De cette manière, lorsque le piston différentiel 52 se déplace vers la droite ou vers la gauche à partir de sa position de repos, l'un ou l'autre des organes mobiles 92, 94 est sollicité en déplacement par le piston différentiel ou par la bride 98 de l'extension tubulaire 96, de manière à se rapprocher de l'autre organe mobile, qui reste dans une position fixe. Etant donné que les différents empilements de rondelles Belleville sont montés avec jeux différents entre les organes mobiles 92, 94, il en résulte que, au cours du rapprochement axial de ces derniers, l'organe mobile en déplacement vient comprimer un à un lesdits ressorts au fur et à mesure qu'il se rapproche de l'autre organe mobile. La fonction et l'avantage d'une telle caractéristique seront expliqués ultérieurement au cours de la description du fonctionnement du mécanisme de direction assistée. On remarquera aussi que la structure de l'ensemble élastique permet d'obtenir un fonctionnement de façon symétrique pour les déplacements vers la droite ou vers la gauche du piston différentiel, par rapport à la position de repos.

Si l'on considère maintenant les figures 2 et 5 en combinaison, on a représenté un élément de commande 110, constitué ici par un pion solidaire de l'arbre de sortie 18. Le pion 110 est perpendiculaire à l'axe de l'alésage 42 et traverse un passage 112 du corps 40, prolongé par un passage 114 du piston 52, prévu dans un plan situé entre les portions axiales 72 et 80. Dans le mode de réalisation représenté, le passage 114 est radial et intersecte l'axe des première et deuxième portions axiales 72 et 80, et est perpendiculaire à ces dernières. En outre, le pion 110 est monté avec un jeu dans les passages 112 et 114 de telle sorte qu'il est susceptible d'entrer en mouvement relativement par rapport au piston 52. Dans ce dernier, sont disposés des poussoirs axiaux 116 et 118 constitués par des tiges alignées montées respectivement entre l'extrémité du pion 110 et l'élément de fermeture 78 et entre l'extrémité du pion 110 et l'autre élément de fermeture 84. Ainsi, au cours d'un déplacement du pion 110 par rapport au piston 52, l'un ou l'autre des éléments de fermeture est sollicité par l'un des poussoirs 116 ou 118 en éloignement de son siège pour modifier la pression qui règne dans le compartiment 66. Pour terminer la description on notera que les passages radiaux 112, 114 sont en communication d'une part avec l'orifice de sortie 28 du distributeur par l'intermédiaire de la chambre annulaire 22, et d'autre part avec la deuxième portion axiale 80 par l'intermédiaire d'un passage axial 120 dans lequel le poussoir 118 est monté de façon coulissante, de manière à autoriser la communication du fluide entre le compartiment 66 et l'orifice de sortie quand l'élément de fermeture 84 est sollicité en éloignement de son siège 82.

Le fonctionnement du dispositif qui vient d'être décrit est le suivant :

Dans la position de repos du distributeur telle qu'illustrée sur la figure 2, chacun des éléments de fermeture 78 et 84 est en appui contre son siège correspondant sous l'influence despressions régnant dans les compartiments 54 et 66 et également sous l'influence de faibles ressorts. Etant donné que la face du piston 52 soumise à la pression du compartiment 66 a une surface double de la face soumise à la pression du compartiment 54, la pression qui règne dans le compartiment 66 est égale à la moitié de la pression qui règne dans le compartiment 54. En conséquence, le distributeur transmet à la chambre 34 du moteur hydraulique une pression égale à Paccu/2 tandis que la chambre 36 reçoit la pression Paccu.

Si l'arbre d'entrée 16 est mis en rotation vers la droite, ce qui correspond à une rotation du volant de direction dans le sens de la flèche de la figure 2, il y a déplacement relatif de l'ensemble corps 40-piston 52 par rapport au pion 110 qui, dans un premier temps, reste fixe ainsi que l'arbre de sortie 18. La barre de torsion engendre un couple antagoniste. Il résulte de ce déplacement relatif, que le poussoir 116 soulève la bille 78 en éloignement de son siège 76, de manière à permettre la

la communication de fluide entre les compartiments 54 et 66 pour créer une augmentation de pression dans ce dernier compartiment. Cette augmentation de pression va avoir tendance à déplacer le piston 52 vers la gauche à l'intérieur de l'alésage 42, de manière à ce qu'il reprenne sa position normale par rapport au pion 110 pour refermer le clapet 78.

On remarquera que le déplacement linéaire que doit effectuer le piston pour que le passage soit de nouveau refermé est d'autant plus grand que le couple d'entrée appliqué $C_E$ c'est-à-dire l'angle de rotation a une valeur élevée. Etant donné la disposition particulière des ressorts et des deux organes mobiles 92, 94, la pression dans le compartiment 66 va tout d'abord augmenter selon un premier taux d'augmentation déterminé uniquement par la raideur du ressort 100 et l'amplitude du déplacement du piston 52 et de l'extension tubulaire 96. Au cours du déplacement du piston 52, l'organe mobile 94 va ensuite venir en contact successivement avec les empilements de rondelles Belleville 102 et 104 et la résistance au déplacement du piston devient de plus en plus grande, ce qui nécessite une augmentation de pression de plus en plus grande dans le compartiment 66 pour déplacer davantage le piston vers la gauche. Ainsi le taux de variation de la pression dans le compartiment 66 est de plus en plus élevé au fur et à mesure que le piston se déplace vers la gauche. Le mouvement du piston 52 cesse lorsque celui-ci s'est déplacé suffisamment pour que la bille 78 revienne en contact avec son siège 76 pour interrompre la communication de fluide entre les compartiments 54 et 66.

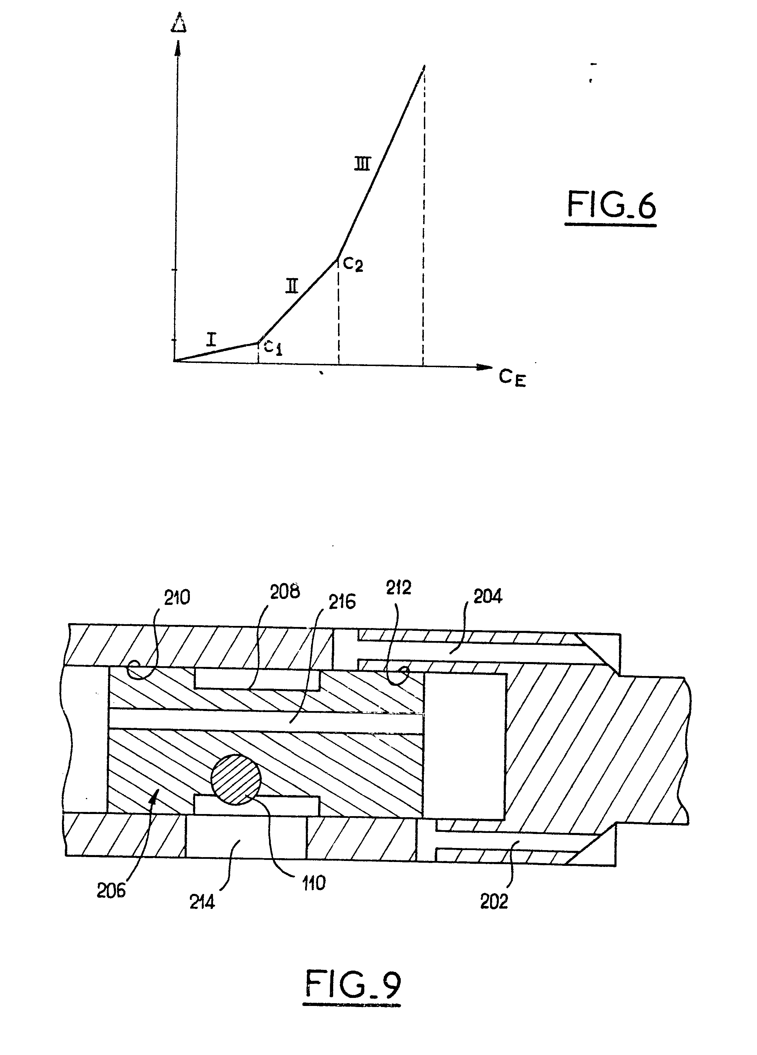

Sur la figure 6, on a représenté le taux d'augmentation de la pression dans le compartiment 66 en fonction du déplacement du piston à partir de sa position de repos, c'est-à-dire sensiblement en fonction du couple appliqué à l'arbre d'entrée. On remarque que la courbe ainsi obtenue comporte trois portions I, II et III ayant des pentes dont les valeurs sont de plus en plus grandes. Ces portions I, II et III correspondant respectivement aux phases de déplacement du piston 52 au cours desquels un (100) puis deux (100; 102) puis trois (100, 102, 104) ressorts sont sollicités par l'organe mobile en déplacement.

Les modifications de pression dans le compartiment 66 sont transmises à la chambre 34 du moteur par l'intermédiaire du passage 68 et de l'orifice de travail 30. L'action de cette pression est alors retransmise par la crémaillère au pignon solidaire de l'arbre de sortie 18, lui-même solidaire du pion 110. L'ensemble se comporte alors en système suiveur. Le mouvement s'arrête lorsque les passages dans le piston différentiel sont à nouveau fermés.

Si l'arbre d'entrée 16 est mis en rotation dans le sens contraire de la flèche de la figure 2, on conçoit que l'ensemble élastique fonctionne de manière identique à la différence près que le piston 52 va commencer à se déplacer vers la droite dans l'alésage 42 consécutivement à une baisse de pression dans le compartiment 66 résultant de l'ouverture du clapet 84 par le poussoir 118. En valeur absolue, la variation de pression dans le compartiment 66 en fonction du couple $C_E$, suit la même loi que lorsque l'arbre d'entrée 16 est mis en rotation dans le sens de la flèche.

On conçoit que l'ensemble élastique pourrait très bien comporter un nombre plus petit ou plus grand de ressorts. En outre, on peut agir sur la caractéristique couple-pression en modifiant à volonté les constantes des différents ressorts (ce qui aurait pour effet de modifier les pentes des différentes portions de la courbe) ou les jeux admissibles entre les différents ressorts et les faces en vis-à-vis des organes mobiles au repos (ce qui aurait pour effet de déplacer les différents coudes $C_1$, $C_2$ de la courbe caractéristique).

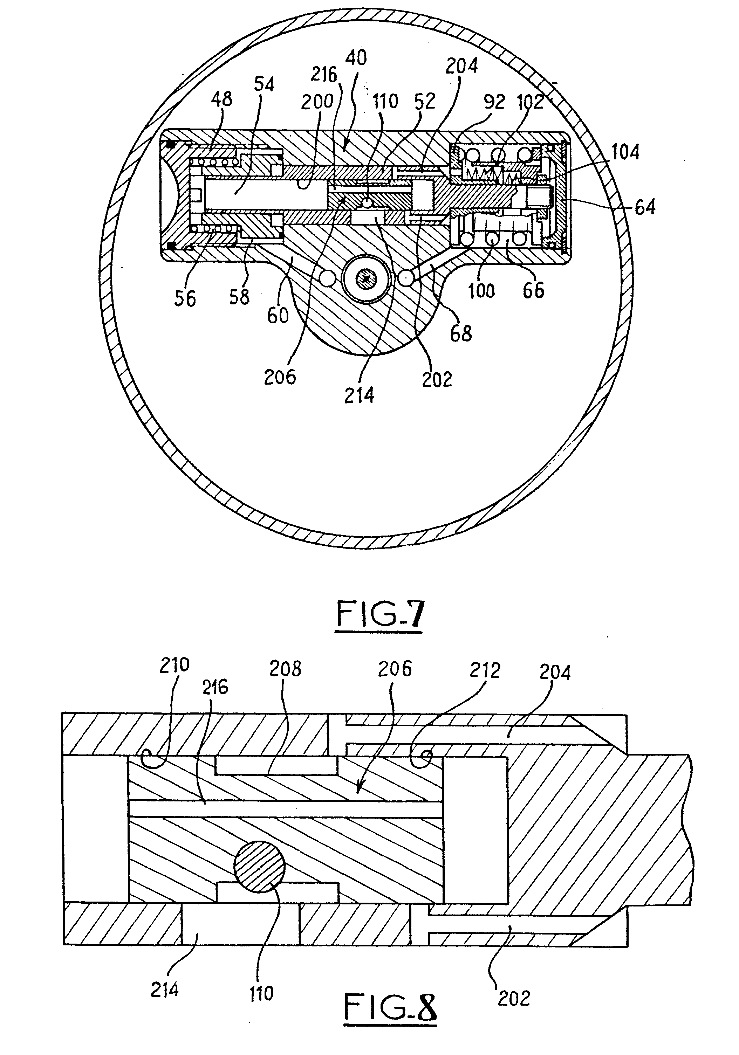

La figure 7 représente un deuxième mode de réalisation de distributeur du mécanisme d'assistance selon la présente invention. Le distributeur de la figure 7 possède une structure sensiblement identique à celle du distributeur illustré sur la figure 2 et les éléments identiques ou similaires à ceux de la figure 2 seront représentés par les mêmes références numériques. Néanmoins, le distributeur illustré sur la figure 7 diffère de celui illustré sur la figure 2, par le fait que les clapets 78 et 84 qui contrôlent la communication de fluide à travers les premier et deuxième passages du piston différentiel ou étagé 52, ont été ici remplacés par un tiroir de distribution. Le piston étagé 52 comporte un alésage borgne 200 qui est en communication avec le compartiment 54. Le premier passage de fluide 202 destiné à mettre en communication les premier et deuxième compartiments 54 et 66 et le deuxième passage de fluide 204 destiné à mettre en communication le deuxième compartiment 66 et l'orifice de sortie 28 débouchent tous deux au niveau de la paroi interne de l'alésage 200. Un tiroir de distribution 206 comportant une gorge 208 bordée par deux portées 210, 212 est monté de façon coulissante à l'intérieur de l'alésage borgne. Le tiroir 206 est solidaire en déplacement du pion 110 de telle sorte qu'il est susceptible de se déplacer dans l'alésage 200 en réponse à une mise en rotation relative de l'arbre d'entrée et de l'arbre de sortie. Lorsque le pion 110 et le tiroir occupent leurs positions de repos par rapport au piston 52, la portée 212 obture les passages 202 et 204 dans lesquels toute communication de fluide est interrompue.

Si le tiroir est commandé en déplacement vers la droite, par le pion 110 (figure 8), en réponse à une rotation de 1 arbre d'entrée dans une première direction, la portée 212 découvre l'orifice 204 et le compartiment 66 est mis en communication avec l'orifice de sortie par l'intermédiaire de la gorge 208, d'une lumière 214 prévue dans le piston 52 et d'un passage lors réglable dans le corps 40. La pression chute dans le compartiment 66 et le piston 52 se déplace vers la droite et comprime l'ensemble élastique de la même manière que dans le cas du premier mode de réalisation, jusqu'à ce que l'orifice 204 soit de nouveau recouvert par la portée 212.

Si le tiroir 206 est commandé en déplacement vers la gauche (figure 9) en réponse à une rotation de l'arbre d'entrée dans la direction opposée, la portée 212 découvre alors le passage 202 et met en communication le compartiment 66 avec le compartiment 54 par l'intermédiaire de l'espace cylindrique situé entre le fond de l'alésage borgne et le tiroir 206, et d'un passage longitudinal 210 prévu dans ledit tiroir. Par la suite de la variation de pression dans le compartiment 66, le piston 52 se déplace dans l'alésage 200 pour comprimer l'ensemble élastique et refermer la communication de fluide dans le passage 202.

On notera qu'à titre de variante, le tiroir de distribution pourrait comporter deux gorges respectivement en communication avec le compartiment 54 et avec l'orifice de basse pression, entourées par une portée obturant normalement les orifices 202 et 204, sans pour cela sortir du cadre de la présente invention.

0004244

REVENDICATIONS

1. Mécanisme d'assistance hydraulique en particulier pour direction assistée comportant un boîtier à l'intérieur duquel sont disposés un organe d'entrée susceptible d'être commandé en rotation par un opérateur, un organe de sortie disposé coaxial avec l'organe d'entrée et relié élastiquement à ce dernier, un distributeur de fluide ayant un orifice d'entrée destiné à être relié à une source de haute pression, un orifice de sortie destiné à être relié à une source de basse pression, et un orifice de travail destiné à être relié à un compartiment d'un moteur hydraulique d'assistance, ledit mécanisme d'assistance étant caractérisé en ce que l'organe distributeur de fluide (38) comporte un corps solidaire de l'un des organes d'entrée ou de sortie, à l'intérieur duquel est défini un premier alésage, un organe mobile (52) coulissant dans l'alésage et qui sépare ce dernier en un premier (54) et un deuxième (66) compartiments respectivement en communication avec l'orifice d'entrée (26) et avec l'orifice de travail (30), ledit organe mobile ayant une face de petite section soumise à la pression qui règne dans le premier compartiment (52) et une face de grande section soumise à la pression qui règne dans le deuxième compartiment (66), l'organe mobile comportant d'autre part un premier passage (72, 74) normalement fermé et destiné à mettre en communication le premier (54) et le deuxième (66) compartiments, et un deuxième passage (80, 120) également normalement fermé, et destiné à mettre en communication le deuxième compartiment (66) avec l'orifice de sortie, un organe de contrôle (110) solidaire de l'autre des organes d'entrée et de sortie, ledit organe de contrôle (110) occupant normalement une position de repos par rapport à l'organe mobile (52) pour laquelle la communication de fluide dans le premier et dans le deuxième passage est interrompue, ledit organe de contrôle (110) étant susceptible de se déplacer par rapport à l'organe mobile (52) et au corps, en réponse à une rotation relative de l'organe d'entrée (16) et de l'organe de sortie (18), pour commander l'ouverture de la communication de fluide dans l'un ou l'autre desdits passages et provoquer dans le deuxième compartiment (66) une variation de pression tendant à commander un déplacement de l'organe mobile (52) de manière à ramener ce dernier dans sa position de repos par rapport à l'organe de contrôle (110) pour interrompre ladite communication de fluide, un ensemble élastique (90) étant prévu dans le deuxième compartiment (66) pour opposer une force de résistance audit déplacement de l'organe mobile (52), la force de résistance ayant une valeur dont le taux de croissance augmente par paliers au fur et à mesure de l'augmentation du déplacement.

2. Mécanisme d'assistance hydraulique selon la revendication 1, caractérisé en ce que l'ensemble élastique (90) comporte une paire d'éléments mobiles (92, 94) en vis-à-vis présentant normalement un écartement maximal donné entre lesquels sont disposés une pluralité de ressorts coaxiaux (100, 102, 104), l'un quelconque des éléments mobiles (92, 94) étant susceptible de se déplacer solidairement avec l'organe mobile (52) pour se rapprocher vers l'autre élément mobile d'une distance correspondant au déplacement de l'organe mobile à partir de sa position de repos, les éléments mobiles (92, 94) et les ressorts (100, 102, 104) étant disposés de telle sorte que l'élément mobile sollicité en déplacement par l'organe mobile, vient compresser un à un lesdits ressorts, au fur et à mesure qu'il se rapproche de l'autre organe mobile.

3. Mécanisme d'assistance hydraulique selon la revendication 2, caractérisé en ce que l'un (100) desdits ressorts maintient les éléments mobiles écartés au maximum lorsque l'organe mobile occupe sa position de repos.

4. Mécanisme d'assistance hydraulique selon l'une quelconque des revendications 1 à 3, caractérisé en ce que l'axe de l'alésage et de l'organe mobile (52)

est perpendiculaire à l'axe des organes d'entrée et de sortie (18), l'organe mobile (52) étant constitué par un piston différentiel , lesdits premier (72, 74) et deuxième (80) passages comportant respectivement une première et une deuxième portions orientées selon l'axe dudit piston, et à l'intérieur desquelles sont respectivement disposés un premier (78) et un deuxième (84) éléments d'obturation occupant normalement une position de fermeture, l'organe de contrôle (110) étant orienté parallèlement à l'axe des arbres d'entrée (10) et de sortie (18) et pénétrant dans un passage (112, 114) du corps et du piston différentiel, ledit passage étant disposé dans un plan situé entre lesdites première et deuxième portions, l'organe de contrôle (110) étant monté avec jeu par rapport au piston différentiel, des moyens de commande (116, 118) sensibles à un déplacement relatif du piston différentiel et de l'organe de commande résultant de la mise en rotation de l'organe d'entrée par rapport à l'organe de sortie, sollicitant l'un ou l'autre des éléments d'obturation (78, 84) dans une position d'ouverture, pour autoriser la communication de fluide dans le premier (72, 74) ou dans le deuxième (80) passage selon le sens de rotation de l'organe d'entrée (16), par rapport à l'organe de sortie (18).

5. Mécanisme d'assistance hydraulique selon la revendication 4, caractérisé en ce que les premier et deuxième portions sont alignées axialement, chacun des éléments d'obturation (78, 84) étant normalement sollicité contre un siège de valve (76, 82) défini respectivement dans les première et deuxième portions, les moyens de commande (116, 118) étant constitués par deux poussoirs alignés et montés de façon coulissante dans le piston différentiel, lesdits poussoirs étant situés de part et d'autre de l'organe de contrôle (110), et susceptibles de coulisser dans le piston différentiel pour solliciter l'un ou l'autre des éléments de fermeture en éloignement de son siège en réponse au déplacement relatif du piston différentiel (52) et de l'organe de contrôle.

6. Mécanisme d'assistance hydraulique selon
la revendication 5, caractérisé en ce que l'organe de
contrôle (110) est constitué par un pion dont l'axe est
parallèle à l'axe des organes d'entrée et de sortie, ledit
pion pénétrant dans le passage (112, 114) formé dans le
corps du distributeur et dans le piston différentiel, et
étant susceptible de solliciter l'un ou l'autre des poussoirs.

7. Mécanisme d'assistance hydraulique selon la
revendication 6, caractérisé en ce que le passage radial
défini dans le corps du distributeur et dans le piston,
fait partie du deuxième passage destiné à relier le second
compartiment (66) à l'orifice de sortie (28).

8. Mécanisme d'assistance hydraulique selon la
l'une quelconque des revendications 1 à 3, caractérisé en
ce que l'axe de l'alésage et de l'organe mobile est perpendiculaire à l'axe des organes d'entrée et de sortie,
l'organe mobile (52) étant constitué par un piston différentiel (52) dont une première surface efficace est constituée par une première face d'extrémité soumise à la pression qui règne dans le deuxième compartiment (66), et dont
une deuxième surface efficace de valeur inférieure à la
première surface efficace est soumise à la pression qui
règne dans le premier compartiment (54), l'organe de contrôle (110) étant orienté parallèlement à l'axe des arbres
d'entrée (16) et de sortie (18) et pénétrant dans un passage du corps (40) et du piston (52), l'organe de contrôle
(110) étant monté avec jeu par rapport au piston différentiel (52), un alésage (200) étant défini à l'intérieur du
piston, un tiroir de distribution (206) solidaire en déplacement de l'organe de contrôle étant monté coulissant
dans l'alésage pour coopérer avec les premier et deuxième
passages de manière à empêcher la communication de fluide
dans lesdits passages lorsque l'organe de contrôle (110) occupe sa position de repos par rapport au piston (52) et pour autoriser la communication de fluide dans le premier ou dans le deuxième passage en réponse à un déplacement relatif de l'organe de contrôle (110) et du piston (52), résultant d'une mise en rotation de l'organe d'entrée par rapport à l'organe de sortie.

9. Mécanisme d'assistance hydraulique selon la revendication 8, caractérisé en ce que l'alésage défini dans le piston différentiel (52) est un alésage borgne qui ouvre sur le premier compartiment (54), le tiroir de distribution comportant un passage pour mettre en communication ledit second compartiment avec le fond de l'alésage borgne.

10. Mécanisme d'assistance hydraulique selon la revendication 8 ou la revendication 9, caractérisé en ce que le tiroir de distribution comporte deux portées (210, 212) entre lesquelles est définie une gorge annulaire (208) en communication avec l'orifice de sortie, lesdites portées recouvrant normalement les extrémités des premier et second passages pour bloquer la communication de fluide dans lesdits passages et étant susceptible de découvrir l'un ou l'autre desdits passages en réponse à un mouvement relatif du piston et du tiroir, pour autoriser la communication de fluide entre l'un des passages et l'alésage, ou entre l'autre des passages et la gorge annulaire selon le sens du déplacement dudit tiroir.

FIG.1

FIG.2

FIG.3

FIG.4

FIG.5

FIG.6

FIG.9

0004244

FIG.7

FIG.8